# EUROPÄISCHE PATENTSCHRIFT

(11) **EP 2 171 943 B1**
(45) Veröffentlichungstag und Bekanntmachung des Hinweises auf die Patenterteilung: **12.01.2011**
(21) Anmeldenummer: 08761231.3
(22) Anmeldetag: 19.06.2008
(51) Int. Cl.: H04L 12/56, H04L 29/08

(54) **VERFAHREN ZUM ROUTEN VON DIENSTNACHRICHTEN**
METHOD FOR ROUTING SERVICE MESSAGES
PROCÉDÉ DE ROUTAGE DE MESSAGES DE SERVICE

(30) Priorität: 26.06.2007 DE 102007029626
(43) Veröffentlichungstag der Anmeldung: 07.04.2010
(73) Patentinhaber: Ophey, Peter, 44799 Bochum (DE)
(72) Erfinder: Ophey, Peter, 44799 Bochum (DE)
(74) Vertreter: Cohausz & Florack
(86) Internationale Anmeldenummer: PCT/EP2008/057804
(87) Internationale Veröffentlichungsnummer: WO 2009/000746

(56) Entgegenhaltungen:
- EP-A- 1 422 886
- EP-A- 1 473 889
- US-A1- 2003 185 211

## Beschreibung

Die Erfindung betrifft ein Verfahren zur Weiterleitung von Dienstnachrichten der Anwendungsschicht in Netzwerken unter Verwendung mindestens eines ersten Routers, wobei mindestens eine Dienstnachricht der Anwendungsschicht vom ersten Router empfangen wird und an ein erstes Subnetzwerk weitergeleitet wird. Daneben betrifft die Erfindung einen Router mit mindestens einem Anschluss für ein Subnetzwerk und Mitteln zur Weiterleitung von Dienstnachrichten sowie ein Computerprogrammprodukt umfassend ein Computerprogramm gespeichert auf einem Speichermedium.

Zur Gliederung der Kommunikationsaufgaben werden in Netzwerken funktionale Ebenen, so genannte Schichten, unterschieden. Für die Internet-Protokoll-Familie ist dabei das TCP/IP-Referenzmodell maßgebend. Es beschreibt den Aufbau und das Zusammenwirken der Netzwerkprotokolle aus der Internet-Protokoll-Familie und gliedert sie in vier aufeinander aufbauende Schichten. Das TCP/IP-Referenzmodell ist auf die Internet-Protokolle zugeschnitten, die den Datenaustausch über die Grenzen lokaler Netzwerke hinaus ermöglichen. Es wird weder der Zugriff auf ein Übertragungsmedium noch die Datenübertragungstechnik definiert. Vielmehr sind die Internet-Protokolle dafür zuständig, Datenpakete über mehrere Punkt-zu-Punkt-Verbindungen (Hops) weiterzuvermitteln und auf dieser Basis Verbindungen zwischen Netzwerkteilnehmern über mehrere Hops herzustellen.

Das TCP/IP-Referenzmodell weist vier Schichten auf:
Die Netzzugangsschicht (Schicht 1), die Internetschicht (Schicht 2), die Transportschicht (Schicht 3) und die Anwendungsschicht (Schicht 4).

Die Anwendungsschicht umfasst alle Protokolle, die mit Anwendungsprogrammen zusammenarbeiten und die Netzwerkinfrastruktur für den Austausch anwendungsspezifischer Daten nutzen. Die Transportschicht stellt eine Ende-zu-Ende-Verbindung her. Das wichtigste Protokoll dieser Schicht ist das Transmission Control Protocol (TCP), das Verbindungen zwischen jeweils zwei Netzwerkteilnehmern zum gesicherten Versenden von Datenströmen herstellt. Es gehören aber auch Datagramm-Protokolle - zum Beispiel das User Datagram Protocol (UDP) - in diese Schicht, bei denen nur die Zustellung an den richtigen Dienst sichergestellt wird und keine Verbindung aufgebaut wird.

Schließlich ist die Internetschicht für die Weitervermittlung von Paketen und die Wegewahl (Routing) zuständig. Auf dieser Schicht und den darunterliegenden Schichten werden Punkt-zu-Punkt-Verbindungen betrachtet. Die Aufgabe dieser Schicht ist es, zu einem empfangenen Paket das nächste Zwischenziel zu ermitteln und das Paket dorthin weiterzuleiten. Kern dieser Schicht ist das Internet Protocol (IP), das einen Paketauslieferungsdienst bereitstellt.

Die Netzwerkschicht ist im TCP/IP-Referenzmodell spezifiziert, enthält jedoch keine Protokolle der TCP/IP-Familie. Sie ist vielmehr als Platzhalter für verschiedene Techniken zur Datenübertragung von Punkt zu Punkt zu verstehen. Die Internet-Protokolle wurden mit dem Ziel entwickelt, verschiedene Subnetze zusammenzuschließen. Daher kann die Host-an-Netz-Schicht durch Protokolle wie Ethernet, FDDI, PPP (Punkt-zu-Punkt-Verbindung) oder 802.11 (WLAN) ausgefüllt werden.

Zunehmend wichtiger in der Informationstechnologie werden Softwareintegrationen, welche über eine Dienst orientierte Architektur bzw. eine sogenannte "Service Oriented Architecture" (SOA) verfügen. Unter einer SOA wird eine über Software-Dienste abgewickelte Kommunikation zwischen unterschiedlichen Netzwerkteilnehmern verstanden, welche auf standardisierten, beispielsweise auf XML verwendenden Protokollen basiert. Dabei kann ein Dienstnutzer eine Nachricht an einen Dienstanbieter senden, um dadurch einen Dienst aufzurufen. Diese Nachrichten werden im Folgenden auch als "Dienstnachrichten" bezeichnet. Unter dem Begriff Dienste werden im Sinne der vorliegenden Erfindung Softwarekomponenten verstanden, welche die Protokolle der Anwendungsschicht nach dem TCP/IP-Referenzmodell bzw. der Ebenen 5-7 des OSI-Schichtenmodells verwenden.

Ein aktueller Trend ist, die Kommunikation mit und zwischen beliebigen elektronischen Geräten durch Dienste, sogenannte "Web-Services", zu realisieren, wobei die Geräte lediglich in der Lage sein müssen, beispielsweise XML-Daten zu verarbeiten und gemäß vereinbarter Protokolle miteinander zu kommunizieren. Die unterschiedlichen Geräte werden üblicherweise durch einen zur Verfügung gestellten Dienst repräsentiert und kommunizieren mit unterschiedlichen im Subnetzwerk vorhandenen und Dienste zur Verfügung stellenden Geräten über Nachrichten. Aus Kommunikationssicht können daher die Geräte wie ein Dienst behandelt werden, welcher in einem Subnetzwerk zur Verfügung gestellt wird. Die Dienste werden über logische Dienstadressen adressiert, welche den jeweiligen Dienst global oder lokal eindeutig kennzeichnen. Um eine manuelle Konfiguration der im Subnetzwerk vorhandenen Geräte an beispielsweise zur Verfügung gestellte Dienste zu vermeiden, werden Dienstentdeckungsprotokolle der Anwendungsschicht verwendet, die An-, Abmelde-, Such- und/oder Adressauflösungsnachrichten definieren, im weiteren als "Dienstentdeckungsnachrichten" bezeichnet, sodass bei Verwendung des Dienstentdeckungsprotokolls die verschiedenen Geräte bzw. Dienste untereinander in einem Subnetzwerk genutzt werden können. Da die Dienstentdeckungsnachrichten der Anwendungsschicht per Multicast bzw. Broadcast im Subnetzwerk direkt an die Subnetzwerkteilnehmer versendet werden, kann zur Reduzierung der Netzbelastung ein Verzeichnisdienst verwendet werden, welcher Informationen über die Geräte und Dienste in einem Netz speichert und an welchen Such- und Adressauflösungsnachrichten per Unicast versendet werden. Die Weiterleitung von beispielsweise aus dem Internet eingehenden Dienstnachrichten an Teilnehmer eines Subnetzwerkes erfolgt unter Verwendung eines Routers. Der Router, beispielsweise ein sogenannter SOAP-Router, bildet ein Gateway zwischen den Informationsnetzwerken und leitet eingehende Dienstnachrichten an einzelne Geräte, Dienste oder Applikationen weiter. Um diese Funktion zu gewährleisten muss der Router Informationen hinsichtlich der einzelnen Dienste und deren Transportadressen besitzen, sodass dieser eine eingehende Dienstnachricht an die richtige Transportadresse, welche beispielsweise eine IP-Adresse eines Gerätes bzw. Dienstes sein kann, sendet. Um diese Informationen dem Router zur Verfügung zu stellen, gibt es zwei Möglichkeiten. Einerseits besteht die Möglichkeit, dass die Routing-Informationen im Router explizit konfiguriert bzw. manuell eingegeben werden. Andererseits besteht die Möglichkeit, dass sich Dienste beim Router automatisch registrieren lassen, so dass dieser aus den Registrierungsnachrichten eines Dienstes die notwendigen Informationen entnehmen kann ; dies wird beispielsweise in der Patentanmeldung EP-A1-1473889 gezeigt.

Die manuelle Konfiguration hat den Nachteil, dass diese jeweils durchgeführt werden muss, sobald ein zusätzliches Gerät bzw. ein zusätzlicher Dienst im Subnetzwerk zur Verfügung gestellt wird. Darüber hinaus erfordert die automatische Registrierung von Diensten am Router, dass die Geräte bzw. die Dienste die Adresse des Routers kennen. Zwar ist eine automatische Zuweisung der Routeradresse, beispielsweise unter Verwendung von DHCP möglich, dies setzt aber eine hierfür geeignete Infrastruktur, wie beispielsweise einen DHCP-Server, voraus und ist insofern nicht für Ad-hoc-Netzwerke geeignet. Insbesondere bei Verwendung von logischen Dienstadressen, wie beispielsweise "WS-Addressing", ist die explizite Benutzung von Routern zumeist ausgeschlossen, da die Geräte nicht die Transportadressen der Dienste verwenden und insofern nicht entscheiden können, ob eine Nachricht an einen Router zu senden wäre, weil das Zielgerät sich außerhalb des Subnetzwerkes befindet oder nicht. Der Verzicht auf Router der Anwendungsschicht zur Weiterleitung von Dienstnachrichten erfordert aber, dass die einzelnen Geräte bzw. die Dienste mit Adressdaten für IP-Router und/oder Verzeichnisdienste aufwändig konfiguriert werden müssen.

Hiervon ausgehend liegt der Erfindung die Aufgabe zugrunde, ein Verfahren zur Weiterleitung von Dienstnachrichten der Anwendungsschicht in Netzwerken zur Verfügung zu stellen, welches ohne zusätzlichen Konfigurationsaufwand auskommt und für Ad-hoc-Netzwerke geeignet ist. Darüber hinaus liegt der Erfindung die Aufgabe zugrunde, ein das erfindungsgemäße Verfahren verwendenden Router sowie ein entsprechendes Computerprogrammprodukt für die Ausführung des Verfahrens zur Verfügung zu stellen.

Gemäß einer ersten Lehre der vorliegenden Erfindung wird die aufgezeigte Aufgabe für ein gattungsgemäßes Verfahren zur Weiterleitung von Dienstnachrichten dadurch gelöst, dass der erste Router unter Verwendung mindestens eines Dienstentdeckungsprotokolls der Anwendungsschicht im ersten Subnetzwerk die von Subnetzwerkteilnehmern zur Verfügung gestellten Dienste ermittelt, zumindest die Daten, welche für die Weiterleitung der Dienstnachrichten der Anwendungsschicht an die die Dienste zur Verfügung stellenden Netzwerkteilnehmer notwendig sind, aus den Dienstnachrichten der Anwendungsschicht extrahiert und die extrahierten Daten zur Weiterleitung der Dienstnachrichten verwendet werden, wobei optional die extrahierten Daten in mindestens einer Routing-Tabelle ablegt werden.

Entgegen den bisher bekannten Verfahren zur Weiterleitung bzw. Routing von Dienstnachrichten der Anwendungsschicht in Netzwerken, bei denen entweder der Router manuell konfiguriert wird oder die im Subnetzwerk vorhandenen Dienste sich explizit bei diesem Router anmelden, wird bei dem erfindungsgemäßen Verfahren der Router durch die Verwendung der Dienstentdeckungsprotokolle der Anwendungsschicht selbstständig konfiguriert, sodass dieser ohne manuell konfiguriert zu werden, Dienstnachrichten der Anwendungsschicht an weitere Subnetzwerkteilnehmer weiterleiten kann. Optional legt der Router die extrahierten Daten in einer Routing-Tabelle ab und aktualisiert diese, sobald ein Gerät oder Dienst hinzugekommen oder aus dem Subnetzwerk entfallen ist. Hierdurch kann das Routing mit einer besonders hohen Geschwindigkeit realisiert werden. Das Subnetzwerk stellt ein vom übrigen Netzwerk abgeteiltes Netzwerk dar, in welchem beispielsweise ein Router vorhanden ist und eine eigene administrative Domäne bildet. Dadurch, dass der erste Router unter Verwendung mindestens eines Dienstentdeckungsprotokolls der Anwendungsschicht automatisch konfiguriert werden kann, ist bei dem erfindungsgemäßen Verfahren eine manuelle Konfiguration des Routers nicht mehr notwendig. Durch die Nutzung der Dienstentdeckungsprotokolle der Anwendungsschicht zur Konfiguration des Routers verhält sich dieser zudem wie ein Gerät, welches einen Dienst zur Verfügung stellt und ist daher vollständig transparent für andere Subnetzwerkteilnehmer. Daraus folgt, dass sich verschiedene Geräte durch Nutzung des Dienstentdeckungsprotokolls im Subnetzwerk anmelden bzw. abmelden und ihre entsprechenden Dienste ohne eigene zusätzliche Konfiguration zur Verfügung stellen können.

Gemäß einer ersten Ausgestaltung des erfindungsgemäßen Verfahrens empfängt und/oder sendet der erste Router per Multicast, Broadcast und/oder Unicast zur Ermittlung der verfügbaren Dienste im Subnetzwerk gemäß mindestens einem Dienstentdeckungsprotokoll Dienstentdeckungsnachrichten, insbesondere Anmelde-, Abmelde-, Such- und/oder Adressauflösungsnachrichten von oder an Subnetzwerkteilnehmern des ersten Subnetzwerkes. Wie bereits ausgeführt, verhält sich der Router nach dem erfindungsgemäßen Verfahren wie ein Subnetzwerkteilnehmer, welcher einen Dienst zur Verfügung stellt, dadurch dass dieser Dienstentdeckungsnachrichten der Anwendungsschicht empfängt und/oder per Multicast, Broadcast und/oder Unicast sendet. Anmelde- und Abmeldenachrichten dienen dazu, ein Gerät bzw. einen Dienst im ersten Subnetzwerk an- bzw. abzumelden. Diese werden häufig per Mulicast an alle Geräte im selben Subnetzwerk gesendet. Gleiches gilt sofern das Gerät aus dem Subnetzwerk entfernt wird bezüglich der Abmeldenachrichten. Mit Suchnachrichten kann im Subnetzwerk nach Subnetzwerkteilnehmern gesucht werden, welche einen speziellen Dienst zur Verfügung stellen. Das Gerät mit dem gesuchten Dienst antwortet auf die Suchnachricht beispielsweise durch eine Such-Treffer-Nachricht, welche die logische Dienstadresse enthält. Über Adressauflösungsnachrichten können logische Dienstadressen in Transportadressen, beispielsweise IP-Adressen, umgewandelt bzw. zugeordnet werden. Adressauflösungsnachrichten werden ebenfalls per Multicast an die Teilnehmer des Subnetzwerkes versendet. Allerdings können diese Nachrichten sowohl per Broadcast als auch per Unicast gesendet werden. Broadcast unterscheidet sich vom Multicast dadurch, dass die Nachricht an alle möglichen Empfänger ohne Spezifizierung gesendet wird, wohingegen per Multicast die Nachrichten an eine Mehrzahl spezifischer Subnetzwerkteilnehmer gesendet werden. Wird eine Dienstentdeckungsnachricht per Unicast gesendet, wird die Dienstentdeckungsnachricht genau an einen einzigen Subnetzwerkteilnehmer gesendet. Dies ist beispielsweise der Fall, wenn das Subnetzwerk lediglich aus einem einzigen Subnetzwerkteilnehmer besteht.

Ermittelt der erste Router, gemäß einer nächsten Ausführungsform des erfindungsgemäßen Verfahrens, durch Auswertung der Dienstentdeckungsnachrichten der Anwendungsschicht aus logischen Dienstadressen die Transportadressen der den jeweiligen Dienst zur Verfügung stellenden Subnetzwerkteilnehmern, können die für das Routen von Dienstnachrichten notwendigen Informationen auf einfache Weise gewonnen werden. Darüber hinaus kann der entsprechende Dienst ohne weiteres über die logische Adresse dem jeweiligen Subnetzwerkteilnehmer und seiner Transportadresse, beispielsweise einer IP-Adresse zugeordnet werden.

Die Flexibilität des erfindungsgemäßen Verfahrens kann dadurch gesteigert werden, dass die Verbindung des ersten Routers mit dem ersten Subnetzwerk aus einer Mehrzahl an Anschlüssen besteht und der erste Router für jeden seiner Anschlüsse Anschluss spezifische Dienstentdeckungsprotokolle verwendet. Hierdurch ist es möglich, unterschiedliche Dienstentdeckungsprotokolle verwendende Subnetzwerkteilnehmer über einen gemeinsamen Router anzusprechen und die Dienste den anderen Subnetzwerkteilnehmern zur Verfügung zu stellen.

Das erfindungsgemäße Verfahren wird ferner dadurch vorteilhaft weitergebildet, dass der erste Router zusätzlich eine Mehrzahl von Anschlüssen mindestens eines weiteren Subnetzwerkes aufweist. Der Router dient dann zur Verbindung beider Subnetzwerke und kann, über die Anwendungsschicht konfiguriert, Dienste beider Subnetzwerke in beiden Subnetzwerken zur Verfügung stellen.

Dienste aus anderen Subnetzwerken können aber auch dadurch zur Verfügung gestellt werden, dass der erste Router Dienstnachrichten der Anwendungsschicht, insbesondere Dienstentdeckungsnachrichten der Anwendungsschicht an mindestens einen zweiten Router eines zweiten Subnetzwerkes sendet oder Dienstnachrichten der Anwendungsschicht, insbesondere Dienstentdeckungsnachrichten der Anwendungsschicht von diesem empfängt. Hierdurch ist es ohne weiteres möglich, die in einem zweiten Subnetzwerk zur Verfügung stehenden Dienste für Subnetzwerkteilnehmer eines ersten Subnetzwerkes zur Verfügung zu stellen, ohne dass es notwendig ist, dass das zweite Subnetzwerk mit dem ersten Subnetzwerk über einen einzigen Router verbunden ist. Eine aufwändige Konfiguration der Router oder der Subnetzwerkteilnehmer ist ebenso nicht notwendig.

Vorzugsweise sendet der zweite Router per Multicast, Broadcast und/oder Unicast bei der Ermittlung der verfügbaren Dienste im zweiten Subnetzwerk Dienstentdeckungsnachrichten der Anwendungsschicht, insbesondere Anmelde-, Abmelde-, Such- und/oder Adressauflösungsnachrichten der Anwendungsschicht oder empfängt diese von Subnetzwerkteilnehmern im zweiten Subnetzwerk.

Um die Netzbelastung zu reduzieren, werden vorzugsweise Dienstnachrichten der Anwendungsschicht in andere Netzwerke außerhalb des Subnetzwerkes des ersten Routers an Transportadressen anderer Router weitergeleitet. Diese können dann in ihren zugehörigen Subnetzwerken per Multicast, beispielsweise Dienstsuchnachrichten, weiterleiten. Die zur Übermittlung der Dienstnachrichten der Anwendungsschicht an die jeweiligen Router verwendeten Netzwerke werden dadurch entlastet.

Eine transparente Nutzung von in anderen Subnetzwerken zur Verfügung gestellten Diensten wird auf einfache Weisung dadurch erreicht, dass beim Weiterleiten von Dienstnachrichten der Anwendungsschicht, welche lokale Transportadressen eines Subnetzwerkes enthalten, in Netzwerke außerhalb des betreffenden Subnetzwerkes die lokale Transportadresse durch die Transportadresse des weiterleitenden Routers ersetzt wird. Die Kommunikation erfolgt dann immer über weiterleitende Router bis zum jeweiligen Subnetzwerkteilnehmer. Unter einer Transportadresse wird zumeist eine TCP/IP-Adresse verstanden. Es können aber auch andere Transportadressen, beispielsweise eine physikalische Transportadresse aus der Netzzugangsschicht verwendet werden. Der Subnetzwerkteilnehmer, welcher außerhalb des Subnetzwerkes vorhandene Dienste nutzen möchte, kommuniziert mit dem Dienst zur Verfügung stellenden Subnetzwerkteilnehmer eines anderen Subnetzwerkes so, als ob dieser im eigenen Subnetzwerk vorhanden sei. Die Kommunikation stellt sich damit besonders einfach dar.

Eine subnetzübergreifende Kommunikation wird dadurch erreicht, dass der erste und der zweite Router über ein gemeinsames drittes Subnetzwerk Dienstnachrichten der Anwendungsschicht, insbesondere Dienstentdeckungsnachrichten der Anwendungsschicht per Multicast, Broadcast und/oder Unicast austauschen.

Gemäß einer nächsten weitergebildeten Ausführungsform des erfindungsgemäßen Verfahrens erfolgt die Weiterleitung der Dienstnachrichten der Anwendungsschicht per Multicast, Broadcast und/oder Unicast abhängig von den ermittelten Diensten eines Subnetzwerkes. Beispielsweise kann die Weiterleitung der Dienstnachrichten, sobald ein Verzeichnisdienst im Subnetzwerk vorhanden ist, durch den Router per Unicast an diesen Verzeichnisdienst übermittelt werden. Andererseits ist vorstellbar, dass neben den zumeist per Multicast oder Broadcast ausgesandten Suchnachrichten, diese per Unicast an einen weiteren Router weitergeleitet werden, sobald der Router ermittelt hat, dass dieser Dienst im vorhandenen Subnetzwerk nicht zur Verfügung steht.

Eine Standardisierung der weitergeleiteten Dienstnachrichten kann dadurch erreicht werden, dass die Dienstnachrichten einen Nachrichtenkörper umfassen, welcher Nutzdaten, vorzugsweise im XML-Format, enthält. Optional kann ein Nachrichtenkopf in den weitergeleiteten Dienstnachrichten vorhanden sein, welcher zusätzliche Informationen, beispielsweise über die Verschlüsselung bzw. die Art der Verschlüsselung der Nutzdaten enthält. Das XML-Format ist ein verbreitetes Datenformat, welches eine hohe Flexibilität in der Kommunikation der Dienstnachrichten ermöglicht und plattformunabhängig genutzt werden kann.

Vorzugsweise werden als Dienstnachrichten "SOAP"-Nachrichten versendet, da diese einen standardisierten Aufbau haben und Nutzdaten im XML-Format enthalten.

Soap-Nachrichten werden üblicherweise nach dem "Web-Service-Adressing"-Verfahren adressiert. Beim "Web-Service-Adressing"-Verfahren können im Nachrichtenkopf der Dienstnachrichten der Anwendungsschicht logische Dienstadressen für die Zieladresse verwendet werden. Werden die Dienste nach dem "Web-Service-Adressing"-Verfahren adressiert, kann somit ein transportneutraler, d.h. von der "echten" Transportadresse, beispielsweise IP-Adresse, unabhängiger Mechanismus zur Adressierung von Diensten verwendet werden.

Gemäß einer zweiten Lehre der vorliegenden Erfindung wird die oben aufgezeigte Aufgabe durch einen Router mit mindestens einem Anschluss für mindestens ein Subnetzwerk und Mitteln zur Weiterleitung von Dienstnachrichten der Anwendungsschicht unter Verwendung des erfindungsgemäßen Verfahrens realisiert. Der erfindungsgemäße Router eröffnet damit die Möglichkeit durch Dienstnachrichten konfiguriert zu werden, so dass eine manuelle Konfiguration oder eine aufwändige Infrastruktur, wie beispielsweise ein DHCP-Server, entfallen kann. Da der erfindungsgemäße Router die Durchführung des erfindungsgemäßen Verfahrens zum Weiterleiten von Dienstnachrichten der Anwendungsschicht ermöglicht, wird im Hinblick auf seine Vorteile gegenüber dem Stand der Technik zusätzlich auf die Vorteile des erfindungsgemäßen Verfahrens verwiesen.

Vorzugsweise sind die Mittel zur Weiterleitung der Dienstnachrichten der Anwendungsschicht des erfindungsgemäßen Routers zumindest teilweise hardwareimplementiert und/oder zumindest teilweise software-implementiert. Die Hardware-Implementierung des erfindungsgemäßen Verfahrens führt zu einer erhöhten Geschwindigkeit der Kommunikation, erfordert jedoch höhere Kosten und einen erhöhten Aufwand im Hinblick auf die Realisierung des Routers. Einfacher wird das erfindungsgemäße Verfahren durch Mittel zur Weiterleitung der Dienstnachrichten realisiert, welche zumindest teilweise software-implementiert sind. Bei der Software-Implementierung kann auf standardisierte Hardware-Komponenten zurückgegriffen werden, sodass insgesamt die Kosten für den Router zur Realisierung des erfindungsgemäßen Verfahrens gesenkt werden können.

Schließlich wird die erfindungsgemäße Aufgabe durch ein Computerprogrammprodukt umfassend ein Computerprogramm gespeichert auf einem Speichermedium dadurch gelöst, dass die Ausführung des auf dem Speichermedium gespeicherten Computerprogramms mit Prozessormitteln die Durchführung des erfindungsgemäßen Verfahrens zur Weiterleitung von Dienstnachrichten ermöglicht.

Es gibt nun eine Vielzahl von Möglichkeiten das erfindungsgemäße Verfahren, den erfindungsgemäßen Router und das erfindungsgemäße Computerprogrammprodukt weiterzuentwickeln und auszugestalten. Hierzu wird verwiesen einerseits auf die den Patentansprüchen 1 und 14 nachgeordneten Patentansprüche, andererseits auf die Beschreibung dreier Ausführungsbeispiele des erfindungsgemäßen Verfahrens in Verbindung mit der Zeichnung. Die Zeichnung zeigt in
- Fig. 1: schematisch ein erstes Ausführungsbeispiel des erfindungsgemäßen Verfahrens zur Weiterleitung von Dienstnachrichten in benachbarten Subnetzwerken,
- Fig. 2a) bis e): schematisch ein zweites Ausführungsbeispiel des erfindungsgemäßen Verfahrens mit Dienstnachrichtenweiterleitung über das Internet und
- Fig. 3a) bis c): schematisch ein drittes Ausführungsbeispiel des erfindungsgemäßen Verfahrens mit subnetzübergreifender Weiterleitung von Dienstnachrichten.

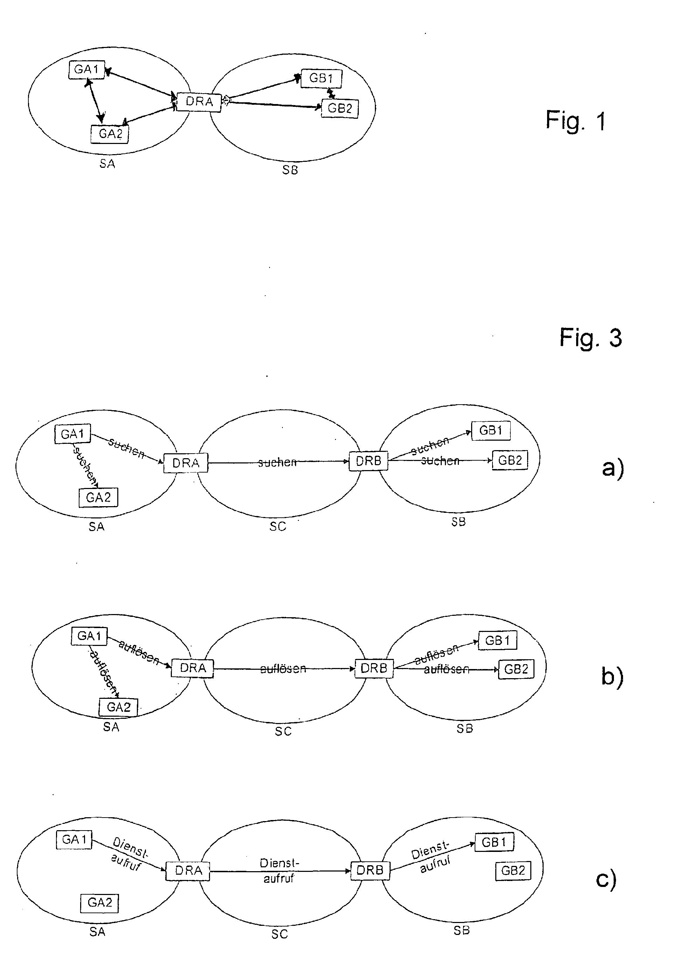

In Fig. 1 sind schematisch zwei Subnetze SA, SB dargestellt, in welchen die Geräte GB1, GB2 sowie GA1 und GA2 jeweils als Subnetzwerkteilnehmer vorhanden sind. Darüber hinaus ist in Fig. 1 ein Router DRA dargestellt, welcher zwischen beiden Netzwerken SA und SB die Weiterleitung von Dienstnachrichten der Anwendungsschicht gemäß der vorliegenden Erfindung ermöglicht. Erfindungsgemäß verwendet der Router DRA, wie die übrigen Subnetzwerkteilnehmer auch, ein Dienstentdeckungsprotokoll der Anwendungsschichtzur Kommunikation mit dem Subnetzwerkteilnehmern. Die Verwendung des Dienstentdeckungsprotokolls der Anwendungsschicht ist in Fig. 1 durch Pfeile angedeutet, welche anzeigen, dass sowohl die Subnetzwerkteilnehmer selbst Dienstnachrichten der Anwendungsschicht, insbesondere Dienstentdeckungsnachrichten der Anwendungsschicht, senden und empfangen können und direkt miteinander kommunizieren. Der Router DRA verhält sich sowohl im Subnetzwerk SA als auch im Subnetzwerk SB in der Anwendungsschicht wie ein einen Dienst zur Verfügung stellender Subnetzwerkteilnehmer und kommuniziert im Subnetzwerk ebenfalls direkt in der Anwendungsschicht mit allen Subnetzwerkteilnehmern. Es ist daher nicht notwendig, dass die Subnetzwerkteilnehmer miteinander kommunizieren können, da der Router DRA über Anschluss spezifische Protokolle die Kommunikation sicherstellt. Über das Dienstentdeckungsprotokoll kann der Router DRA nun durch Aussenden von Suchnachrichten, beispielsweise per Multicast oder Broadcast im Subnetzwerk SB oder SA feststellen, ob zusätzliche Dienste im Subnetzwerk vorhanden sind. Die von den Subnetzwerkteilnehmern GB1 und GB2 bzw. GA1 und GA2 an den Router DRA übermittelten Dienstnachrichten werden von dem Router DRA ausgewertet und die entsprechenden Daten zur Weiterleitung von Dienstnachrichten der Anwendungsschicht extrahiert und verwendet. Optional können die Daten in einer Routing-Tabelle abgelegt werden. Das Ablegen der für die Weiterleitung von Dienstnachrichten notwenigen Daten kann sowohl temporär als auch permanent erfolgen. Im Gegensatz zu auf Transportschichtebene konfigurierten Routern, kann durch die Verwendung des Dienstentdeckungsprotokolls der Anwendungsschicht der Router DRA vollständig selbständig konfiguriert werden. Dieser erkennt dann automatisch, sobald Dienste im Subnetzwerk sich an- oder abmelden.

Als Dienstentdeckungsnachrichten der Anwendungsschicht werden insbesondere An-, Abmelde-, Such- und/oder Adressauflösungsnachrichten an die einzelnen Subnetzwerkteilnehmer übermittelt oder von diesen versendet.

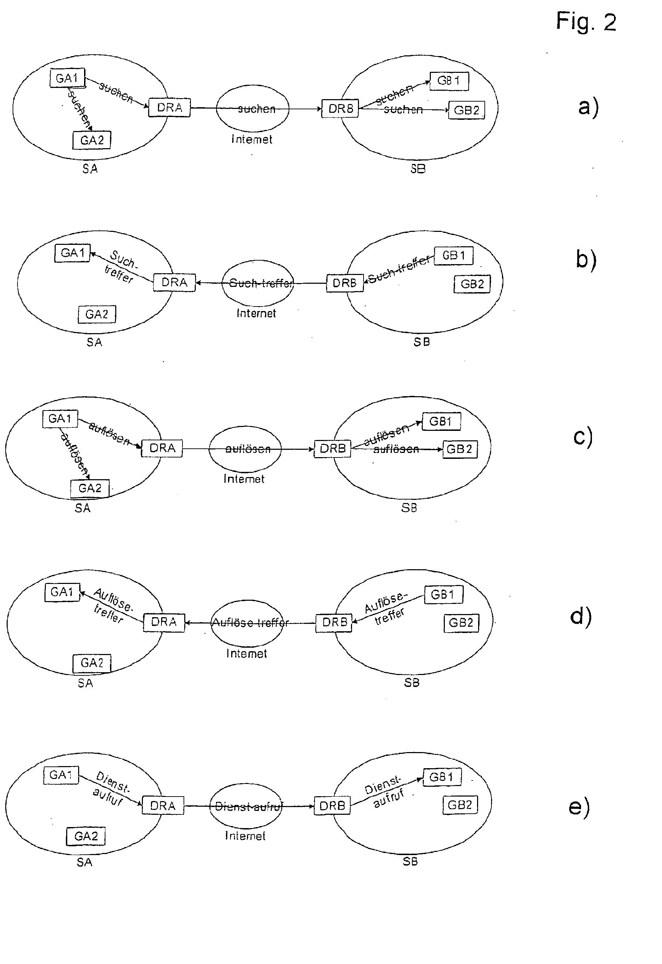

In Fig. 2a) bis e) ist nun ein Ausführungsbeispiel des erfindungsgemäßen Verfahrens von der Dienstsuche bis zum Dienstaufruf dargestellt. Fig. 2a) zeigt zunächst schematisch die beiden Subnetze SA und SB, welche jeweils über einen Router DRA und DRB verfügen. Der Subnetzwerkteilnehmer GA1 versendet eine Suchnachricht, beispielsweise per Multicast im Subnetzwerk SA. Geht nun beim Router DRA die Suchnachricht ein, so prüft dieser, ob ein entsprechender Dienst im Subnetzwerk zur Verfügung steht. Ist dies nicht der Fall, leitet der Router DRA die Dienstnachricht der Anwendungsschicht, beispielsweise über das Internet, an den Router DRB des Subnetzwerkes SB weiter. Die Dienstnachrichten, insbesondere Adressauflösungsnachrichten, weisen vorzugsweise logische Adressen für die Dienste und entsprechend zugehörige Transportadressen der den Dienst zur Verfügung stellenden Subnetzwerkteilnehmer, insbesondere gemäß dem "Web-Service-Adressing"-Verfahren, auf. Bei der Weiterleitung der Suchnachricht der Anwendungsschicht durch den Router DRA an den Router DRB trägt Router DRA an Stelle der Transportadresse des Subnetzwerkteilnehmers GA1 seine eigene Transportadresse in die Dienstnachricht ein. Hiermit ist erfindungsgemäß gewährleistet, dass der Router DRB, beispielsweise eine Antwort eines Subnetzwerkteilnehmers eines zweiten Subnetzwerkes, beispielsweise SB, wieder direkt an den Router DRA übermittelt, welcher dann eine Weiterleitung an den jeweiligen Subnetzwerkteilnehmer GA1 durchführt. Der Router DRB, welcher die Suchnachricht des Routers DRA empfangen hat, sendet diese per Multicast oder Broadcast an die Subnetzwerkteilnehmer GB1 und GB2 des Subnetzwerkes SB. Selbstverständlich ist es auch möglich die Dienstnachricht der Anwendungsschicht per Unicast, beispielsweise an einen Verzeichnisdienst im Subnetzwerk weiterzuleiten, so dass dieser die Weiterverteilung der Nachricht an die einzelnen Subnetzwerkteilnehmer übernimmt. Hierdurch kann die Netzbelastung weiter verringert werden.

Dadurch, dass der Router DRB wie im vorliegenden Ausführungsbeispiel an Stelle der Transportadresse aus dem externen Subnetz des Routers DRA seine eigene Transportadresse in die Dienstnachricht der Anwendungsschicht eingetragen hat, übermittelt der Subnetzwerkteilnehmer GB1 aus dem Subnetzwerk SB, wie in Fig. 2b) dargestellt, eine Such-Treffer-Nachricht an Router DRB. Dieser leitet die Such-Treffer-Nachricht an den Router DRA weiter. Die Such-Treffer-Nachricht enthält die logische Dienstadresse des Dienstes der Anwendungsschicht von GB1. Im Subnetzwerk SA wird die Suchtreffernachricht nunmehr an den Subnetzwerkteilnehmer GA1 weitergeleitet. Dieser sendet, wie in Fig. 2c) dargestellt, eine Adressauflösungsnachricht per Multicast an die Subnetzwerkteilnehmer im Subnetzwerk SA, welche wiederum von dem Router DRA an den Router DRB in das Subnetzwerk SB übermittelt wird. Die Adressauflösungsnachricht, gesendet vom Subnetzwerkteilnehmer GA1, enthält die logische Adresse des Dienstes der Anwendungsschicht des Subnetzwerkteilnehmers GB1, so dass der Subnetzwerkteilnehmer GB1 beim Empfang der Adressauflösenachricht seinerseits eine Adressauflösetreffernachricht an den Subnetzwerkteilnehmer GA1 senden kann. Wie zuvor stellen die Router DRA und DRB sicher, dass die Adressauflösetreffernachricht unmittelbar an den Subnetzwerkteilnehmer GA1 weitergeleitet werden, ohne dass diese manuell konfiguriert oder ein DHCP-Server zur Verfügung gestellt werden muss. Die Adressauflösetreffernachricht enthält zudem die lokale Transportadresse des Dienstes der Anwendungsschicht des Subnetzwerkteilnehmers GB1, welche beim Weiterleiten durch die Router DRA und DRB jeweils durch die Transportadressen der Router ausgetauscht werden. Die Router DRA und DRB ordnen beispielsweise in Routing-Tabellen die jeweiligen Transportadressen den logischen Dienstadressen im Subnetzwerk zu, so dass beim Dienstaufruf, wie er in Fig. 2e) gezeigt wird, der Router DRB die Dienstaufrufnachricht des Subnetzwerkteilnehmers GA1 direkt an den Subnetzwerkteilnehmer GB1 weiterleiten kann. Da erfindungsgemäß sich die Router DRA und DRB aufgrund der Verwendung der Dienstentdeckungsprotokolle der Anwendungsschicht wie dienstentdeckungsprotokollfähige Geräte im Subnetzwerk verhalten, ist es für den Subnetzwerkteilnehmer GA1 irrelevant, ob sich der gesuchte Dienst im Subnetzwerk SA oder Subnetzwerk SB befindet. Damit können auch Ad-hoc Netzwerk fähige Geräte Dienste auch außerhalb des Subnetzwerkes nutzen.

In Fig. 3a) bis c) ist nun die subnetzübergreifende Weiterleitung von Dienstnachrichten der Anwendungsschicht dargestellt, wobei die Router DRA und DRB über ein gemeinsames Subnetzwerk SC miteinander kommunizieren und über dieses Dienstnachrichten der Anwendungsschicht austauschen. Beispielsweise sendet der Subnetzwerkteilnehmer GA1 eine Suchnachricht für einen entsprechenden Dienst per Multicast oder Broadcast im Subnetzwerk SA aus. Der Router DRA empfängt diese Dienstnachricht vom Subnetzwerkteilnehmer GA1 und sendet diese beispielsweise unmittelbar an den Router DRB weiter, da im Subnetzwerk SC kein entsprechender Dienst mit seiner logischen Dienstadresse registriert ist. Der Router DRB wiederum sendet per Multicast oder Broadcast die Suchadresse an die Subnetzwerkteilnehmer GB1 und GB2 weiter. Nach dem ein Such-Treffer dem Subnetzwerkteilnehmer GA1 zurückgemeldet worden ist, versendet dieser per Multicast Adressauflösungsnachrichten, welche die logische Dienstadresse des gefundenen Dienstes des Netzwerkteilnehmers GB1 beinhaltet, Fig. 3b). Diese Adressauflösungsnachricht wird vom Router DRA unmittelbar an den Router DRB weitergeleitet, welcher dann per Multicast die Adressauflösungsnachricht im Subnetzwerk SB verteilt. Der Dienstaufruf, des in der Anwendungsschicht vom Subnetzwerkteilnehmer GB1 zur Verfügung gestellten Dienstes, erfolgt, wie aus der Fig. 3c) hervorgeht, trotz des Zwischen Subnetzwerk SA und SB vorhandenen dritten Subnetzwerkes SC völlig transparent. Für den dienstaufrufenden Subnetzwerkteilnehmer GA1 stellt es insofern keinen Unterschied dar, ob der den Dienst zur Verfügung stellende Subnetzwerkteilnehmer GB1 im Subnetzwerk SA, SC oder SB liegt.

## Patentansprüche

1. Verfahren zur Weiterleitung von Dienstnachrichten der Anwendungsschicht in Netzwerken unter Verwendung mindestens eines ersten Routers, wobei mindestens eine Dienstnachricht der Anwendungsschicht vom ersten Router empfangen wird und an ein erstes Subnetzwerk weitergeleitet wird,
**dadurch gekennzeichnet, dass** der erste Router unter Verwendung mindestens eines Dienstentdeckungsprotokolls der Anwendungsschicht im ersten Subnetzwerk die von Subnetzwerkteilnehmern zur Verfügung gestellten Dienste ermittelt, zumindest die Daten, welche für die Weiterleitung der Dienstnachrichten an die die Dienste zur Verfügung stellenden Subnetzwerkteilnehmer notwendig sind, aus den Dienstnachrichten der Anwendungsschicht extrahiert und die extrahierten Daten zur Weiterleitung der Dienstnachrichten der Anwendungsschicht verwendet werden, wobei optional die extrahierten Daten in mindestens einer Routing-Tabelle ablegt werden.

2. Verfahren nach Anspruch 1,
**dadurch gekennzeichnet, dass** der erste Router zur Ermittlung der verfügbaren Dienste im Subnetzwerk gemäß mindestens einem Dienstentdeckungsprotokoll Dienstentdeckungsnachrichten der Anwendungsschicht, insbesondere Anmelde-, Abmelde-, Such- und/oder Adressauflösungsnachrichten der Anwendungsschicht von Subnetzwerkteilnehmern des ersten Subnetzwerkes empfängt und/oder an diese per Multicast, Broadcast und/oder Unicast sendet.

3. Verfahren nach Anspruch 1 oder 2,
**dadurch gekennzeichnet, dass** der erste Router durch Auswertung der Dienstentdeckungsnachrichten der Anwendungsschicht aus logischen Dienstadressen die Transportadressen der den jeweiligen Dienst zur Verfügung stellenden Subnetzwerkteilnehmer ermittelt.

4. Verfahren nach einem der Ansprüche 1 bis 3,
**dadurch gekennzeichnet, dass** die Verbindung des ersten Routers mit dem ersten Subnetzwerk aus einer Mehrzahl an Anschlüssen besteht und der erste Router für jeden seiner Anschlüsse Anschluss spezifische Dienstentdeckungsprotokolle der Anwendungsschicht verwendet.

5. Verfahren nach einem der Ansprüche 4,
**dadurch gekennzeichnet, dass** der erste Router zusätzlich eine Mehrzahl von Anschlüssen mindestens eines weiteren Subnetzwerkes aufweist.

6. Verfahren nach einem der Ansprüche 1 bis 5,
**dadurch gekennzeichnet, dass** der erste Router Dienstnachrichten der Anwendungsschicht, insbesondere Dienstentdeckungsnachrichten der Anwendungsschicht an mindestens einen zweiten Router eines zweiten Subnetzwerkes sendet oder Dienstnachrichten der Anwendungsschicht, insbesondere Dienstentdeckungsnachrichten der Anwendungsschicht von diesem empfängt.

7. Verfahren nach Anspruch 6,
**dadurch gekennzeichnet, dass** der zweite Router bei der Ermittlung der verfügbaren Dienste im zweiten Subnetzwerk Dienstentdeckungsnachrichten der Anwendungsschicht, insbesondere Anmelde-, Abmelde-, Such- und/oder Adressauflösungsnachrichten, gemäß dem entsprechenden Dienstentdeckungsprotokoll per Multicast, Broadcast und/oder Unicast sendet oder von Subnetzwerkteilnehmern im zweiten Subnetzwerk empfängt.

8. Verfahren nach einem der Ansprüche 1 bis 7,
**dadurch gekennzeichnet, dass** Dienstnachrichten der Anwendungsschicht in andere Netzwerke außerhalb des Subnetzwerkes des ersten Routers an Transportadressen anderer Router per Unicast weitergeleitet werden.

9. Verfahren nach einem der Ansprüche 1 bis 8,
**dadurch gekennzeichnet, dass** beim Weiterleiten von Dienstnachrichten der Anwendungsschicht, welche lokale Transportadressen eines Subnetzwerkes enthalten, in Netzwerke außerhalb des betreffenden Subnetzwerkes die lokale Transportadresse durch die Transportadresse des weiterleitenden Routers ersetzt wird.

10. Verfahren nach einem der Ansprüche 5 bis 9,
**dadurch gekennzeichnet, dass** der erste und der zweite Router über ein gemeinsames drittes Subnetzwerk Dienstnachrichten der Anwendungsschicht, insbesondere Dienstentdeckungsnachrichten der Anwendungsschicht per Multicast, Broadcast und/oder Unicast austauschen.

11. Verfahren nach einem der Ansprüche 1 bis 10,
**dadurch gekennzeichnet, dass** die Weiterleitung der Dienstnachrichten der Anwendungsschicht per Multicast, Broadcast und/oder Unicast abhängig von den ermittelten Diensten eines Subnetzwerkes erfolgt.

12. Verfahren nach einem der Ansprüche 1 bis 11,
**dadurch gekennzeichnet, dass** die weitergeleiten Dienstnachrichten der Anwendungsschicht einen Nachrichtenkörper umfassen, welcher Nutzdaten, vorzugsweise in XML-Format, enthält.

13. Verfahren nach einem der Ansprüche 1 bis 12,
**dadurch gekennzeichnet, dass** als Dienstnachrichten der Anwendungsschicht "SOAP"-Nachrichten versendet werden.

14. Verfahren nach einem der Ansprüche 1 bis 13,
**dadurch gekennzeichnet, dass** die Dienste nach dem "Web-Service-Adressing"-Verfahren adressiert werden.

15. Router mit mindestens einem Anschluss für mindestens ein Subnetzwerk und Mitteln zur Weiterleitung von Dienstnachrichten der Anwendungsschicht unter Verwendung eines Verfahrens nach einem der Ansprüche 1 bis 14.

16. Router nach Anspruch 15,
**dadurch gekennzeichnet, dass** die Mittel zur Weiterleitung der Dienstnachrichten der Anwendungsschicht zumindest teilweise hardwareimplementiert und/oder zumindest teilweise software-implementiert sind.

17. Computerprogrammprodukt umfassend ein Computerprogramm gespeichert auf einem Speichermedium,
**dadurch gekennzeichnet, dass** die Ausführung des auf dem Speichermedium gespeicherten Computerprogramms mit Prozessormitteln die Durchführung eines Verfahrens zur Weiterleitung von Dienstnachrichten gemäß Anspruch 1 bis 14 ermöglicht.

## Claims

1. Method for forwarding service messages of the application layer in networks by using at least one first router, wherein at least one service message of the application layer is received by the first router and is forwarded to a first sub-network, **characterised in that** the first router, by using at least one service discovery protocol of the application layer, determines the services provided by sub-network subscribers in the first sub-network, at least the data, which is necessary for forwarding the service messages to the sub-network subscribers which provide the services, is extracted from the service messages of the application layer and the extracted data is used to forward the service messages of the application layer, wherein the extracted data is optionally stored in at least one routing table.

2. Method according to Claim 1, **characterised in that** the first router, in order to determine the services available in the sub-network, receives service discovery messages of the application layer according to at least one service discovery protocol, in particular login, logout, search and/or address resolution messages of the application layer, from sub-network subscribers of the first sub-network and/or sends them to these by multicast, broadcast and/or unicast.

3. Method according to Claim 1 or 2, **characterised in that** the first router, by evaluating the service discovery messages of the application layer, determines from logical service addresses the transport addresses of the sub-network subscribers providing the respective service.

4. Method according to any one of Claims 1 to 3, **characterised in that** the connection between the first router and the first sub-network consists of a plurality of connections and the first router uses connection-specific service discovery protocols of the application layer for each of its connections.

5. Method according to any one of Claims 4, **characterised in that** the first router additionally has a plurality of connections of at least one further sub-network.

6. Method according to any one of Claims 1 to 5, **characterised in that** the first router sends service messages of the application layer, in particular service discovery messages of the application layer, to at least one second router of a second sub-network or receives from this service messages of the application layer, in particular service discovery messages of the application layer.

7. Method according to Claim 6, **characterised in that** the second router, when determining the services available in the second sub-network, sends service discovery messages of the application layer, in particular login, logout, search and/or address resolution messages, according to the corresponding service discovery protocol, by multicast, broadcast and/or unicast or receives them from sub-network subscribers in the second sub-network.

8. Method according to any one of Claims 1 to 7, **characterised in that** service messages of the application layer are forwarded to other networks outside the sub-network of the first router to transport addresses of other routers by unicast.

9. Method according to any one of Claims 1 to 8, **characterised in that** when service messages of the application layer, which contain local transport addresses of a sub-network, are forwarded into networks outside the sub-network in question the local transport address is replaced by the transport address of the forwarding router.

10. Method according to any one of Claims 5 to 9, **characterised in that** the first and second routers exchange service messages of the application layer, in particular service discovery messages of the application layer, by multicast, broadcast and/or unicast, via a common third sub-network.

11. Method according to any one of Claims 1 to 10, **characterised in that** the forwarding of the service messages of the application layer is performed by multicast, broadcast and/or unicast depending on the services determined of a sub-network.

12. Method according to any one of Claims 1 to 11, **characterised in that** the forwarded service messages of the application layer comprise a message body which contains user data, preferably in XML format.

13. Method according to any one of Claims 1 to 12, **characterised in that** "SOAP" messages are sent as service messages of the application layer.

14. Method according to any one of Claims 1 to 13, **characterised in that** the services are addressed according to the Web Service Addressing method.

15. Router having at least one connection for at least one sub-network and means for forwarding service messages of the application layer by using a method according to any one of Claims 1 to 14.

16. Router according to Claim 15, **characterised in that** the means for forwarding the service messages of the application layer are at least partly hardware-implemented and/or at least partly software-implemented.

17. Computer program product comprising a computer program stored on a storage medium, **characterised in that** the execution of the computer program stored on the storage medium using processor means allows the performance of a method for forwarding service messages according to Claims 1 to 14.

## Revendications

1. Procédé de routage de messages de services de la couche application dans des réseaux en utilisant au moins un premier routeur, dans lequel au moins un message de service de la couche application est reçu d'un premier routeur et est transmis à un premier sous-réseau,**caractérisé en ce que**
le premier routeur détermine, en utilisant au moins un protocole de détection de services de la couche application dans un premier réseau, les services mis à disposition d'utilisateurs de sous-réseaux, au moins les données, qui sont nécessaires pour le routage des messages de services aux utilisateurs de sous-réseaux mettant à disposition les services, sont extraits à partir des messages de services de la couche application et les données extraites sont utilisées pour le routage des messages de services de la couche application, les données extraites étant optionnellement stockées dans au moins une table de routage.

2. Procédé selon la revendication 1,
**caractérisé en ce que**
le premier routeur reçoit, pour déterminer les services disponibles dans le sous-réseau, selon au moins un protocole de détection de services des messages de détection de services de la couche application, en particulier des messages de connexions, de déconnexions, de recherches et/ou de résolution d'adresses de la couche application en provenance d'utilisateurs du premier sous-réseau et/ou les envoie à ceux-ci par trafic multicast, broadcast et/ou unicast.

3. Procédé selon la revendication 1 ou 2,
**caractérisé en ce que**
le premier routeur détermine, par l'analyse des messages de détection de services de la couche application, à partir des adresses de services logiques, les adresses de transport des utilisateurs mettant à disposition le service respectif.

4. Procédé selon l'une quelconque des revendications 1 à 3, **caractérisé en ce que**
la liaison du premier routeur avec le premier sous-réseau est constituée d'une pluralité de connexions et le premier routeur utilise pour chacune de ses connexions des protocoles de détection de services, spécifiques aux connexions, de la couche application.

5. Procédé selon l'une quelconque des revendications 4, **caractérisé en ce que**
le premier routeur présente en outre une pluralité de connexions d'au moins un autre sous-réseau.

6. Procédé selon l'une quelconque des revendications 1 à 5, **caractérisé en ce que**
le premier routeur envoie des messages de services de la couche application, en particulier des messages de détection de services de la couche application, à au moins un deuxième routeur d'un deuxième sous-réseau ou reçoit de celui-ci des messages de services de la couche application, en particulier des messages de détection de services de la couche application.

7. Procédé selon la revendication 6,
**caractérisé en ce que**
le deuxième routeur envoie, lors de la détermination des services disponibles dans le deuxième sous-réseau, des messages de détection de services de la couche application, en particulier des messages de connexions, de déconnexions, de recherches et/ou de résolution d'adresses selon le protocole correspondant de détection de services par trafic multicast, broadcast et/ou unicast ou les reçoit d'utilisateurs du sous-réseau dans le deuxième sous-réseau.

8. Procédé selon l'une quelconque des revendications 1 à 7, **caractérisé en ce que**
des messages de services de la couche application dans d'autres réseaux en dehors du sous-réseau du premier routeur sont routés à des adresses de transport d'autres routeurs par trafic unicast.

9. Procédé selon l'une quelconque des revendications 1 à 8, **caractérisé en ce que**
lors du routage de messages de services de la couche application, qui contiennent des adresses de transport locales d'un sous-réseau, dans des réseaux en dehors du sous-réseau concerné, l'adresse de transport locale est remplacée par l'adresse de transport du routeur, qui fait du routage.

10. Procédé selon l'une quelconque des revendications 5 à 9, **caractérisé en ce que**
le premier et le deuxième routeur échangent, via un troisième sous-réseau commun, des messages de services de la couche application, en particulier des messages de détection de services de la couche application par trafic multicast, broadcast et/ou unicast.

11. Procédé selon l'une quelconque des revendications 1 à 10, **caractérisé en ce que**
le routage des messages de services de la couche application se fait par trafic multicast, broadcast et/ou unicast en fonction des services déterminés d'un sous-réseau.

12. Procédé selon l'une quelconque des revendications 1 à 11, **caractérisé en ce que**
les messages de services routés de la couche application comprennent un corps de message, qui contient des données utiles, de préférence au format XML.

13. Procédé selon l'une quelconque des revendications 1 à 12, **caractérisé en ce que**
l'on utilise comme messages de services de la couche application des messages "SOAP".

14. Procédé selon l'une quelconque des revendications 1 à 13, **caractérisé en ce que**
les services sont adressés selon la procédure "Web-Service-Addressing".

15. Routeur comportant au moins une connexion pour au moins un sous-réseau et des moyens pour faire du routage des messages de services de la couche application en utilisant un procédé selon l'une quelconque des revendications 1 à 14.

16. Routeur selon la revendication 15,
**caractérisé en ce que**
les moyens pour faire du routage des messages de services de la couche application sont mis en oeuvre au moins en partie par matériel et/ou au moins en partie par logiciel.

17. Produit de programme d'ordinateur comprenant un programme d'ordinateur stocké sur un support de mémoire, **caractérisé en ce que**
l'exécution du programme d'ordinateur stocké sur le support de mémoire avec des moyens de processeur permet l'exécution d'un procédé pour faire du routage des messages de services selon les revendications 1 à 14.
